# EUROPEAN PATENT SPECIFICATION

(11) **EP 3 495 698 B1**
(45) Date of publication and mention of the grant of the patent: **17.06.2020**
(21) Application number: 18190035.8
(22) Date of filing: 21.08.2018
(51) Int. Cl.: F16H 63/50, F16H 61/04

(54) **STRADDLED VEHICLE**
GRÄTSCHSITZFAHRZEUG
VÉHICULE À ENFOURCHER

(30) Priority: 07.12.2017 JP 2017235056
(43) Date of publication of application: 12.06.2019
(73) Proprietor: Yamaha Hatsudoki Kabushiki Kaisha, Shizuoka-ken 438-8501 (JP)
(72) Inventor: HARATA, Nagatomo, Iwata-shi, Shizuoka-ken, 438-8501 (JP)
(74) Representative: Grünecker Patent- und Rechtsanwälte PartG mbB

(56) References cited:
- GB-A- 2 371 839
- US-A1- 2008 119 324
- US-A1- 2016 214 614

## Description

The present invention relates to a straddled vehicle capable of adjusting an output of an engine in order to change a gear ratio of a transmission.

US 2016/0214614 A1 discloses that a motorcycle's transmission control device is provided in which, in a case of a clutchless shift operation, disengagement of a fit of gears of a transmission and the fit of subsequent gears thereof can be smoothly achieved. A throttle operation unit controls the degree of opening of a throttle valve to become a first throttle opening-degree when a clutchless shifting unit determines that a clutchless down-shift operation can be implemented, and controls the degree of opening of the throttle valve to become a second throttle opening-degree when the clutchless shifting unit determines that a fit between shift gears is disengaged by the clutchless down-shift operation.

US 2008/0119324 A1 discloses a motorcycle which includes a transmission, an ECU, an engine and a transmission operating mechanism. The engine has a crank. The transmission operating mechanism includes a shift pedal and a load sensor. The load sensor detects an operation of the shift pedal by a driver, and applies a detected value to the ECU. The ECU decreases an output of the engine when a torque (driving force) having at least a predetermined value is transmitted from the crank to the transmission when a shift operation of the driver is detected by the load sensor. Moreover, the ECU does not decrease the output when the torque transmitted from the crank to the transmission is less than the predetermined value when the shift operation of the driver is detected by the load sensor.

At a race or the like, a quick gear shift is required. Therefore, a rider sometimes carries out a gear shift without performing a clutch operation (hereinafter referred to as clutchless shifting). In this case, because the gear shift is carried out with motive power transmitted from a crankshaft to a main shaft, it is difficult to separate gears. As such, a system for carrying out the output adjustment of the engine has been developed such that the gears can be separated easily during the clutchless shifting.

For example, in a driving force control device described in JP 2016-98728 A, a gear change operation of a dog-type transmission is detected with a clutch connected. A target throttle opening of an engine is set to an initial opening in response to the detection of the gear change operation. Here, the initial opening is a degree of opening at which dogs are not separated from each other or pressing against each other, but are simply abutting against each other, for example. Thereafter, a gear ratio of the dog-type transmission is changed, whereby the throttle opening of the engine is adjusted to gradually become closer to the required throttle opening by an accelerator operation of a straddled vehicle.

In the above-mentioned driving force control device, the target throttle opening of the engine is set to the initial opening, whereby the two gears being in an engaging state can be easily separated from each other. However, when a throttle opening of the engine is maintained at the initial opening, the two gears to be changed from a non-engaging state to the engaging state may be maintained in the non-engaging state by rotating at rotation speeds substantially equal to each other. In this case, with the torque of the engine not transmitted to a drive wheel by the transmission, the vehicle keeps traveling. The traveling state of the vehicle at this time is not caused by an accelerator operation of the rider. Therefore, driving feeling of the rider is degraded.

An object of the present invention is to provide a straddled vehicle that inhibits degradation of driving feeling when a gear of a transmission is switched. According to the present invention said object is solved by a straddled vehicle having the features of the independent claim 1. Preferred embodiments are laid down in the dependent claims.
(1) A straddled vehicle according to one aspect of the present invention includes an engine, a drive wheel, a transmission that transmits a torque generated by the engine to the drive wheel, and a torque adjustor that adjusts the torque generated in a crankshaft of the engine to a first target value such that an engaging force of first and second gears, to be changed from an engaging state where the first and second gears are engaged with use of a dog to a non-engaging state where the first and second gears are not engaged with the use of the dog, is reduced in the transmission, and adjusts the torque generated in the crankshaft of the engine to a second target value different from the first target value after the first and second gears are changed to the non-engaging state such that third and fourth gears, to be changed from the non-engaging state where the third and fourth gears are not engaged with use of another dog to the engaging state where the third and fourth gears are engaged with the use of the other dog, is changed to the engaging state in the transmission, wherein the first target value is a value within a predetermined boundary range that corresponds to the engine being in a boundary state where an engaging force generated between the dog and a dog hole is reduced, and the second target value is a value outside of the boundary range, wherein the boundary range is a range of a certain width including zero.
   In the straddled vehicle, the torque generated in the crankshaft is adjusted to the first target value. Thus, an engaging force of the first and second gears is reduced, and the first and second gears are changed from the engaging state to the non-engaging state. Thereafter, the torque generated in the crankshaft is adjusted to the second target value that is different from the first target value. In this case, a difference is generated between the third and fourth gears, so that the third and fourth gears can be changed to the engaging state in a short length of time. Thus, the vehicle is inhibited from being kept traveling with the torque of the engine not transmitted to the drive wheel by the transmission. As a result, degradation of the driving feeling when the gear of the transmission is switched is inhibited.
   One gear out of the third and fourth gears may be one of the first and second gears. In this case, the other gear out of the third and fourth gears is a gear different from the first and second gears.
(2) The torque adjustor adjusts the torque generated in the crankshaft of the engine to a third target value within the boundary range after the third and fourth gears are changed to the engaging state such that the torque becomes closer to the first target value.
   In this case, instantaneous generation of a large engaging force between the third and fourth gears after the third and fourth gears are changed to the engaging state is inhibited. Therefore, degradation of the driving feeling of the rider when the third and fourth gears are engaged is inhibited.
(3) The straddled vehicle further includes a requirement torque acquirer that acquires a requirement torque to be generated in the crankshaft of the engine in correspondence with a rotation speed of the engine, wherein the torque adjustor adjusts the torque generated in the crankshaft of the engine such that the torque generated in the crankshaft gradually becomes closer from the third target value to the requirement torque acquired by the requirement torque acquirer.
   In this case, the engaging force generated between the third and fourth gears changes gently until reaching the engaging force corresponding to the requirement torque. Therefore, degradation of the driving feeling of the rider after the third and fourth gears are engaged is inhibited.
(4) The straddled vehicle further includes a determiner that determines whether the requirement torque acquired by the requirement torque acquirer is within the boundary range including the first target value in response to a shift operation for a change of a gear ratio of the transmission, wherein the torque adjustor adjusts the torque generated in the crankshaft of the engine when it is determined that the acquired requirement torque is not within the boundary range, and does not have to adjust the torque generated in the crankshaft of the engine when it is determined that the acquired requirement torque is within the boundary range.
   When the requirement torque is not within the predetermined range, a difference between the torque generated in the crankshaft and the first target value is relatively large. Therefore, the torque generated in the crankshaft is adjusted to the first target value, whereby the first and second gears can be easily changed to the non-engaging state. On the other hand, when the requirement torque is within the predetermined range, the torque generated in the crankshaft is substantially equal to the first target value. Therefore, it is possible to easily change the first and second gears to the non-engaging state without adjusting the torque generated in the crankshaft.
   In this manner, when the torque generated in the crankshaft by an accelerator operation of the rider is adjusted to a value suitable for the change of the transmission, the torque is not adjusted by the torque adjustor. Thus, the gear ratio can be changed by the skill of the rider.
(5) The torque adjustor sets the second target value to a positive value when the acquired requirement torque is a positive value, and sets the second target value to a negative value when the acquired requirement torque is a negative value.
   A direction in which the engaging force generated between the third and fourth gears is exerted when the torque generated in the crankshaft is a positive value is opposite to a direction in which the engaging force generated between the third and fourth gears is exerted when the torque generated in the crankshaft is a negative value. In the above-mentioned configuration, a plus-minus sign of the second target value is set to coincide with a plus-minus sign of the requirement torque. Therefore, the third and fourth gears are engaged, and then an engaging force that is exerted in an appropriate direction can be generated between the third and fourth gears.
(6) The torque adjustor sets the second target value to the requirement torque acquired by the requirement torque acquirer.

In this case, a relatively large difference can be generated between the rotation speed of the third gear and the rotation speed of the fourth gear, so that the third and fourth gears can be changed to the engaging state in a short length of time.
Fig. 1 is a side view of a motorcycle according to one embodiment of the present invention;
Fig. 2 is a diagram for explaining schematic configurations of a transmission and a shift mechanism provided in a mission case of Fig. 1;
Figs. 3(a) and 3(b) are schematic diagrams for explaining a mechanism of transmission of a torque transmitted to a main shaft to a drive shaft;
Fig. 4 is a left side view of the motorcycle showing a first link mechanism, a shift pedal and their peripheral members of Fig. 1;
Figs. 5(a) to 5(c) are diagrams showing a relationship between a dog hole of a fixed gear and a dog of a slide gear in the transmission;
Figs. 6(a) and 6(b) are diagrams for explaining the reason why driving feeling of a rider is degraded in the case where the engine is maintained in a boundary state when clutchless shifting is performed;
Fig. 7 is a diagram showing an example of adjustment of an actual torque in the case where a shift operation for a downshift is performed without an operation of a clutch lever when the engine is in a driven state;
Fig. 8 is a diagram showing an example of adjustment of the actual torque in the case where the shift operation for the upshift is performed without the operation of the clutch lever when the engine is in a driving state;
Fig. 9 is a diagram showing a schematic configuration of an engine and its peripheral members, and a control system of the motorcycle; and
Fig. 10 is a flow chart showing one example of a control operation in an ECU.

A straddled vehicle according to one embodiment of the present invention will be described below with reference to drawings. In the following description, a motorcycle will be described as one example of the straddled vehicle.

### [1] Schematic Configuration of Motorcycle

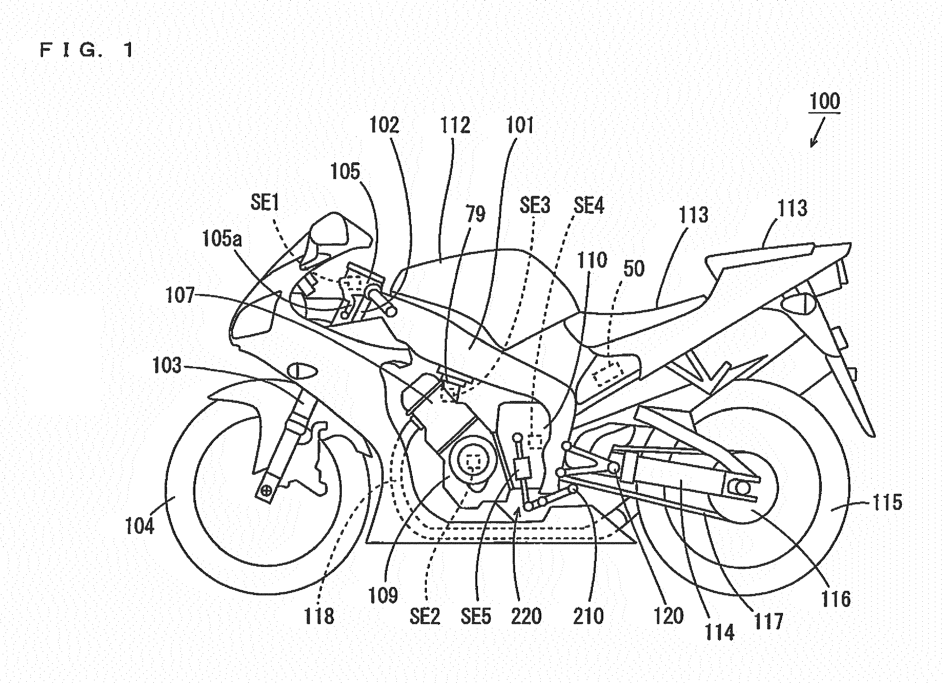

Fig. 1 is a side view of the motorcycle according to the one embodiment of the present invention. In the motorcycle 100 of Fig. 1, a head pipe 102 is provided at a front end of a body frame 101. A front fork 103 is provided at the head pipe 102 to be swingable in a left-and-right direction. A front wheel 104 is supported at a lower end of the front fork 103 to be rotatable. A handle 105 is provided at an upper end of the head pipe 102.

A clutch lever 105a, an accelerator grip (not shown) and an accelerator sensor SE1 are provided at the handle 105. The accelerator sensor SE1 detects an amount of operation of the accelerator grip (hereinafter referred to as an accelerator opening) by a rider. A clutch sensor (not shown) that detects an amount of operation of the clutch lever 105a by the rider is further provided at the handle 105.

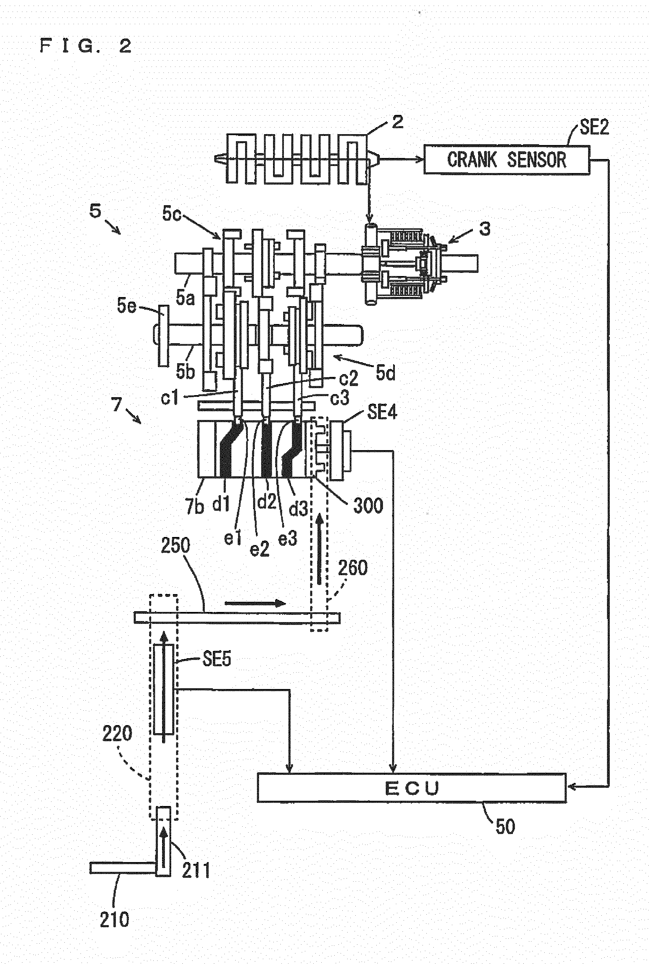

As shown in Fig. 1, the body frame 101 supports an engine 107. An intake pipe 79 and an exhaust pipe 118 are attached to the engine 107. A crankcase 109 is provided at a lower portion of the engine 107. A crank sensor SE2 is provided in the crankcase 109. The crank sensor SE2 detects a rotation angle of a crankshaft 2 (Fig. 2) of the engine 107.

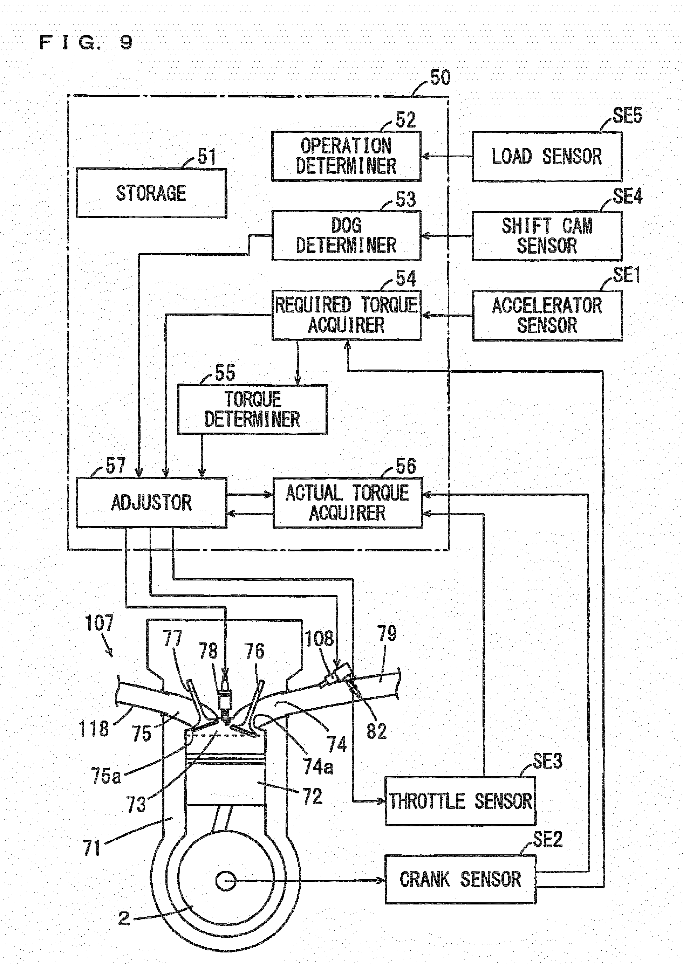

Further, a throttle sensor SE3 is provided in the intake pipe 79. The throttle sensor SE3 detects a degree of opening (hereinafter referred to as a throttle opening) of a below-mentioned ETV (Electronic Throttle Valve) 82 (Fig. 9).

A mission case 110 is attached to a rear portion of the crankcase 109. A shift cam sensor SE4, a below-mentioned transmission 5 (Fig. 2) and a below-mentioned shift mechanism 7 (Fig. 2) are provided in the mission case 110. The shift cam sensor SE4 detects a rotation angle of a below-mentioned shift cam 7b (Fig. 2).

A shift pedal 210 is provided at a side portion of the mission case 110. The shift pedal 210 is integrally attached to a below-mentioned pedal arm 211 (Fig. 2). A back step 120 is provided at a position farther rearward than the shift pedal 210. The back step 120 is supported by the body frame 101.

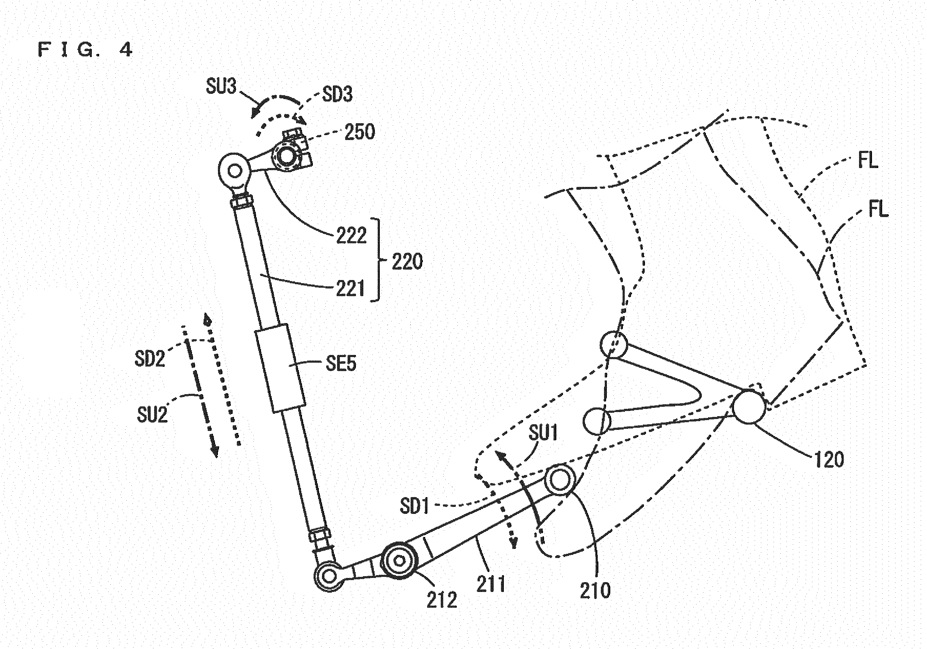

Further, a first link mechanism 220 is provided at a side portion of the mission case 110. A load sensor SE5 is provided at the first link mechanism 220. The rider operates the shift pedal 210 by applying a load to the shift pedal 210. When the rider operates the shift pedal 210, the load sensor SE5 detects the load applied to a below-mentioned first link shaft 221 (Fig. 4).

A fuel tank 112 is provided above the engine 107. Two seats 113 are provided to be arranged in a front-and-rear direction at positions farther rearward than the fuel tank 112. An ECU (Electronic Control Unit) 50 is provided below a front seat 113.

An ECU 50 includes a CPU (Central Processing Unit), a ROM (Read Only Memory) and a RAM (Random Access Memory). The ROM is made of a non-volatile memory, for example, and stores a system program, a control program of the CPU and the like. The RAM is made of a volatile memory, for example, is used as a work area of the CPU, and stores various data temporarily. The CPU implements various functions by executing the control program stored in the ROM. Details of various functions implemented by the CPU will be described below.

A rear arm 114 is connected to the body frame 101 to extend to a position farther rearward than the engine 107. The rear arm 114 rotatably supports a rear wheel 115 and a rear wheel driven sprocket 116. A chain 117 is wound around the rear wheel driven sprocket 116 and a below-mentioned rear wheel drive sprocket 5e (Fig. 2).

### [2] Transmission and Shift Mechanism

Fig. 2 is a diagram for explaining schematic configurations of the transmission 5 and the shift mechanism 7 provided in the mission case 110 of Fig. 1. As shown in Fig. 2, the transmission 5 includes a main shaft 5a and a drive shaft 5b. The main shaft 5a is connected to a clutch 3. A plurality of gears 5c are attached to the main shaft 5a, and a plurality of gears 5d and a rear wheel drive sprocket 5e are attached to the drive shaft 5b.

For example, the torque of the crankshaft 2 generated by the engine 107 of Fig. 1 is transmitted to the clutch 3. When the clutch 3 is in a connected state, the torque that has been transmitted to the clutch 3 is transmitted to the main shaft 5a of the transmission 5. The torque that has been transmitted to the main shaft 5a is transmitted to the drive shaft 5b via the gears 5c, 5d. The torque that has been transmitted to the drive shaft 5b is transmitted to the rear wheel 115 (Fig. 1) via the rear wheel drive sprocket 5e, the chain 117 (Fig. 1) and the rear wheel driven sprocket 116 (Fig. 1). Thus, the rear wheel 115 is rotated. During an operation of the engine 107, the rotation angle of the crankshaft 2 detected by the crank sensor SE2 is output to the ECU 50.

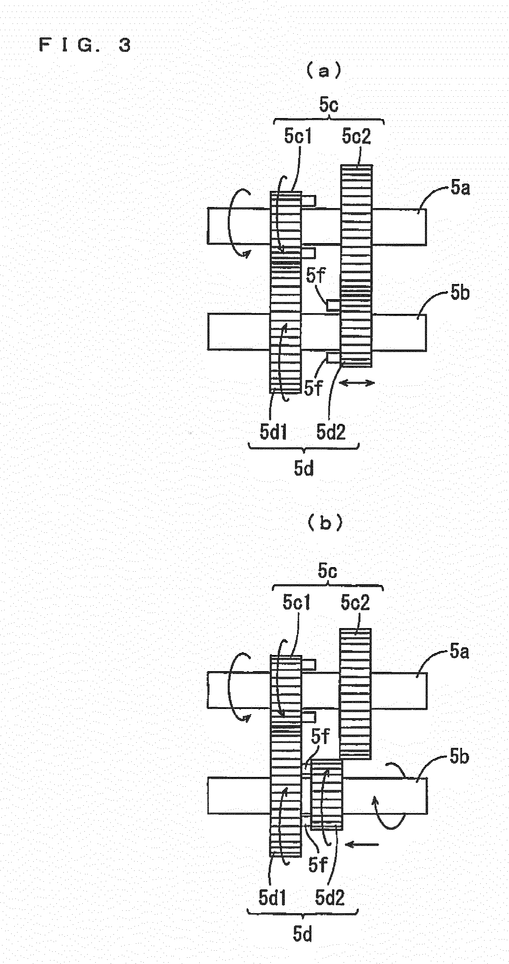

Figs. 3(a) and 3(b) are schematic diagrams for explaining the mechanism of transmission of the torque, that has been transmitted to the main shaft 5a, to the drive shaft 5b. Figs. 3(a) and 3(b) show two gears 5c1, 5c2 out of the plurality of gears 5c and two gears 5d1, 5d2 out of the plurality of gears 5d.

While being movable in an axial direction of the main shaft 5a, the gear 5c1 is fixed to the main shaft 5a in a rotation direction of the main shaft 5a. The gear 5c2 is rotatably attached to the main shaft 5a while being prevented from moving in the axial direction of the main shaft 5a.

The gear 5d1 is rotatably attached to the drive shaft 5b while being prevented from moving in an axial direction of the drive shaft 5b. In the case where the gear 5c1 and the gear 5d1 are engaged, the gear 5d1 is rotated by the rotation of the main shaft 5a.

While being movable in the axial direction of the drive shaft 5b, the gear 5d2 is fixed to the drive shaft 5b in the rotation direction of the drive shaft 5b. Therefore, the drive shaft 5b rotates when the gear 5d2 rotates.

As shown in Fig. 3(a), when the gear 5d2 is separated from the gear 5d1, the gear 5d1 is not fixed to the drive shaft 5b in the rotation direction of the drive shaft 5b. In this case, when the main shaft 5a rotates, the gear 5d1 rotates in conjunction with the rotation of the main shaft 5a. However, the drive shaft 5b rotates not in conjunction with the rotation of the main shaft 5a or stops. That is, the transmission 5 does not transmit a torque between the engine 107 and the rear wheel 115.

On the other hand, as shown in Fig. 3(b), the gear 5d2 moves in the axial direction to become closer to the gear 5d1. Thus, when convex-shape dogs 5f provided on a side surface of the gear 5d2 are fitted into recess-shape dog holes (not shown) provided in a side surface of the gear 5d1, the gear 5d1 and the gear 5d2 are fixed. In this case, when the main shaft 5a rotates, the gear 5d2 rotates together with the gear 5d1 in conjunction with the rotation of the main shaft 5a. Thus, the drive shaft 5b rotates together with the gear 5d2 in conjunction with the rotation of the main shaft 5a.

In the case where the plurality of gears are in a state shown in Fig. 3(a), then the gear 5c1 is brought closer to the gear 5c2, and the gear 5c1 and the gear 5c2 are fixed, the gear 5c2 rotates together with the gear 5c1. In this case, the gear 5d2 rotates in conjunction with the rotation of the main shaft 5a and the gear 5c2. Thus, the drive shaft 5b rotates together with the gear 5d2 in conjunction with the rotation of the main shaft 5a. Hereinafter, a gear that moves on the main shaft 5a or the drive shaft 5b in the axial direction similarly to the gears 5c1, 5d2 is referred to as a slide gear. Further, a gear that is prevented from moving in the axial direction of the main shaft 5a or the drive shaft 5b similarly to the gears 5c2, 5d1 is referred to as a fixed gear.

In this manner, in the transmission 5, one or a plurality of slide gears are moved, and a combination of one or a plurality of slide gears and one or a plurality of fixed gears is changed. Thus, the transmission path of a torque from the main shaft 5a to the drive shaft 5b can be changed. Thus, the rotation speed of the drive shaft 5b can be changed relative to the rotation speed of the main shaft 5a.

In the transmission 5, the shift mechanism 7 of Fig. 2 is used in order to move the one or plurality of slide gears. As shown in Fig. 2, the shift mechanism 7 includes the shift pedal 210, the pedal arm 211, the first link mechanism 220, a shift shaft 250, a second link mechanism 260, a stopper plate 300, the shift cam 7b and shift forks c1 to c3.

As described below, the rider pushes down or lifts up the shift pedal 210. In this case, as indicated by thick arrows in Fig. 2, the load applied to the shift pedal 210 is transmitted to the shift shaft 250 via the pedal arm 211 and the first link mechanism 220. Thus, the shift shaft 250 rotates. Further, the torque generated in the shift shaft 250 is transmitted to the shift cam 7b via the second link mechanism 260. Thus, the shift cam 7b is rotated.

Cam grooves d1 to d3 are formed in the shift cam 7b. The shift forks c1 to c3 are coupled to the cam grooves d1 to d3 by slide pins e1 to e3, respectively. The stopper plate 300 is attached to one end of the shift cam 7b. Further, the shift cam sensor SE4 is provided in the vicinity of one end of the shift cam 7b to be in close proximity to the stopper plate 300. During the operation of the engine 107, the rotation angle of the shift cam 7b detected by the shift cam sensor SE4 is output to the ECU 50.

When the shift cam 7b rotates by the operation of the shift pedal 210 by the rider, the slide pins e1 to e3 coupled to the shift forks c1 to c3 move in the cam grooves d1 to d3. In this case, any one of the shift forks c1 to c3 is moved in the axial direction of the shift cam 7b, and the one or plurality of slide gears are moved.

The transmission 5 of the present example has a neutral position and first to sixth gear positions. When the shift cam 7b (Fig. 2) rotates in one direction, the gear position of the transmission 5 is sequentially switched to the first, second, third, fourth, fifth and sixth gear positions. Thus, a gear ratio of the transmission 5 sequentially increases (an upshift). On the other hand, when the shift cam 7b (Fig. 2) rotates in the opposite direction, the gear position of the transmission 5 is sequentially switched to the sixth, fifth, fourth, third, second and first gear positions. Thus, the gear ratio of the transmission 5 sequentially decreases (a downshift).

Here, the rider sometimes operates the shift pedal 210 with the intent of so-called clutchless shifting, that Is, the change of the gear ratio of the transmission 5 without an operation of the clutch lever 105a of Fig. 1. In the following description, the operation of the shift pedal 210 by the rider who has the intent of changing the gear ratio of the transmission 5 is referred to as a shift operation. In the present embodiment, whether the shift operation has been performed is determined based on an output signal from the load sensor SE5 of Fig. 2. When the shift operation is performed without the operation of the clutch lever 105a, output adjustment of the engine 107 for changing the gear ratio of the transmission 5 is suitably carried out.

Whether the shift operation has been performed is determined when the clutch 3 is in the connected state. Whether the clutch 3 is in the connected state can be determined based on whether a detection value of the above-mentioned clutch sensor has exceeded a predetermined value, for example.

### [3] Operation Example of Shift Pedal by Rider and Detection of Load by Load Sensor

Fig. 4 is a left side view of the motorcycle 100 showing the first link mechanism 220 and the shift pedal 210 of Fig. 1, and their peripheral members, As shown in Fig. 4, in the left side view of the motorcycle 100, the pedal arm 211 is provided to extend in the front-and-rear direction. The shift pedal 210 is attached to the rear end of the pedal arm 211.

An attachment portion 212 is provided at a portion that Is slightly closer to the front end than the center portion of the pedal arm 211. The attachment portion 212 of the pedal arm 211 is supported at a support shaft (not shown) extending horizontally leftward from the body frame 101 (Fig. 1) to be rotatable.

The shift shaft 250 is arranged above the pedal arm 211. The first link mechanism 220 is provided to connect the pedal arm 211 to the shift shaft 250. Specifically, the first link mechanism 220 includes the first link shaft 221 and a second link shaft 222. One end of the second link shaft 222 is fixed to the shift shaft 250 such that the second link shaft 222 is rotatable together with the shift shaft 250 and extends forwardly of the vehicle from the shift shaft 250. One end of the first link shaft 221 is connected to the front end of the pedal arm 211 to be rotatable. The other end of the first link shaft 221 is connected to the other end of the second link shaft 222 to be rotatable.

The load sensor SE5 is provided at the substantially center portion of the first link shaft 221. The load sensor SE5 is made of an elastic type (a strain gauge type, an electrostatic capacitance type and the like) or a magnetostriction-type load cell, for example, and is configured to be able to detect a tensile load and a compressive load that are applied to the first link shaft 221.

While placing his or her left foot on the back step 120, the rider operates the shift pedal 210 by pushing down or lifting up the shift pedal 210 with the back step 120 as a supporting point.

A return-type transmission method is employed in the shift mechanism 7 of Fig. 2. In the shift mechanism 7, when the shift pedal 210 is lifted up, an operation for the upshift from the first position to the sixth position is performed. Further, when the shift pedal 210 is pushed down, the operation for changing the gear position from the neutral position to the first position or the operation for the downshift from the sixth to first position is performed.

Here, as indicated by a thick one-dot and dash arrow SU1 in Fig. 4, when the shift pedal 210 is lifted up by the rider's left foot FL, the pedal arm 211 rotates In a counterclockwise direction. Thus, as Indicated by a thick one-dot and dash arrow SU2, one end (lower end) of the first link shaft 221 is pulled downward. Further, as indicated by a thick one-dot and dash arrow SU3, the second link shaft 222 rotates about the shift shaft 250 in the counterclockwise direction. At this time, a tensile load is applied to the first link shaft 221. The tensile load is detected by the load sensor SE5 and output to the ECU 50 of Fig. 2. In the load sensor SE5 of the present example, a detection value (voltage value) of the tensile load is 0 or a positive value.

On the other hand, as indicated by a thick dotted arrow SD1 in Fig. 4, when the shift pedal 210 is pushed down by the rider's left foot FL, the pedal arm 211 rotates in a clockwise direction. Thus, as indicated by a thick dotted arrow SD2, one end (lower end) of the first link shaft 221 is lifted up. Further, as indicated by a thick dotted arrow SD3, the second link shaft 222 rotates about the shift shaft 250 in the clockwise direction. At this time, a compressive load is applied to the first link shaft 221. The compressive load is detected by the load sensor SE5 and output to the ECU 50 of Fig. 2. In the load sensor SE5 of the present example, a detection value (voltage value) of the compressive load is 0 or a negative value.

In the present embodiment, when the absolute value of a detection value of a load detected by the load sensor SE5 exceeds a predetermined load threshold value, it is determined that the shift operation has been performed. On the other hand, when the absolute value of a detection value of a load detected by the load sensor SE5 is equal to or smaller than the load threshold value, it is determined that the shift operation has not been performed. Further, in the case where it is determined that the shift operation has been performed, when a detection value of a load is a positive value, it is further determined that the shift operation is the shift operation for the upshift. On the other hand, when a detection value of a load is a negative value, it is further determined that the shift operation is the shift operation for the downshift.

Whether the shift operation has been performed may be determined based on an output signal of the shift cam sensor SE4, for example, instead of being determined based on an output signal of the load sensor SE5. In this case, whether the shift operation has been performed can be determined based on a change of a rotation angle of the shift cam 7b (Fig. 2). Further, when the shift operation has been performed, whether the shift operation is the shift operation for the downshift or upshift is determined.

Alternatively, a displacement sensor that detects an amount of displacement of the shift pedal 210 may be provided in the motorcycle 100 for the determination whether the shift operation has been performed. In this case, whether the shift operation has been performed may be determined based on the output signal of the displacement sensor.

### [4] State of Engine 107

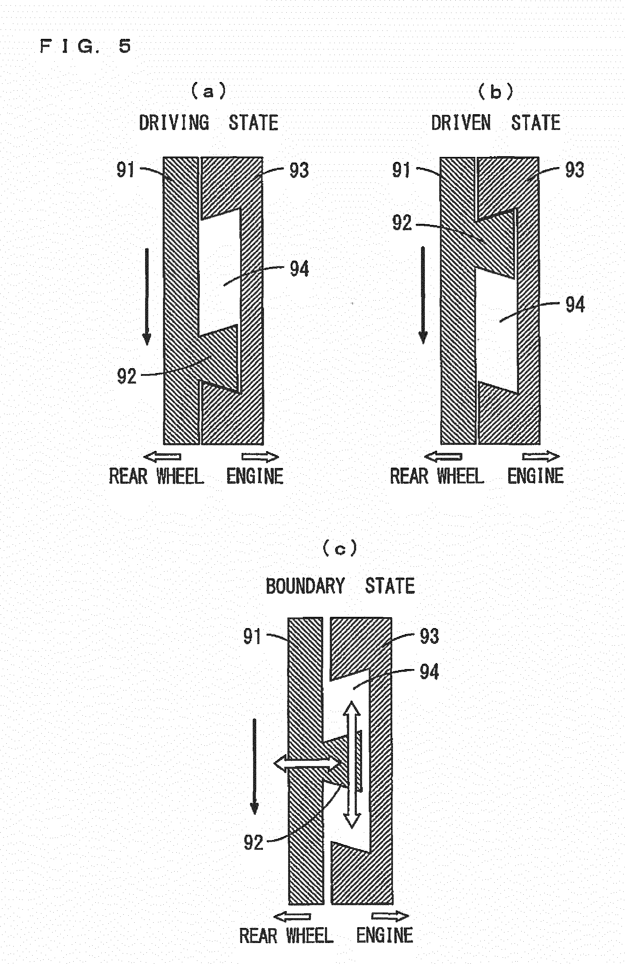

Here, the state of the engine 107 in operation will be described together with the relationship between a dog hole of the fixed gear and a dog of the slide gear in the transmission 5. The relationship between the dog holes of the fixed gear and the dogs of the slide gear in the transmission 5 changes according to the state of the engine 107. Figs. 5(a) to 5(c) are diagrams showing the relationship between the dog hole of the fixed gear and the dog of the slide gear in the transmission 5. Figs. 5(a) to 5(c) show schematic cross sectional views of a portion where a dog 92 is formed in the slide gear 91 and a portion where a dog hole 94 is formed in the fixed gear 93. The slide gear 91 and the fixed gear 93 of the present example correspond to the gear 5c1 and the gear 5c2 of Fig. 3, respectively. Further, the portions of the slide gear 91 and the fixed gear 93 shown in Figs. 5(a) to 5(c) move (rotate) in the direction indicated by thick arrows. Further, the clutch 3 of Fig. 2 is in the connected state.

When the motorcycle 100 is accelerated and traveling on an up-hill slope, for example, a torque of the crankshaft 2 (Fig. 3) is transmitted to the drive shaft 5b (Fig. 3). Specifically, the torque transmitted from the crankshaft 2 to the slide gear 91 via the main shaft 5a is further transmitted to the fixed gear 93 and the drive shaft 5b by the dog 92. In this case, as shown in Fig. 5(a), a front side surface of the dog 92 in the moving direction thereof abuts against a front side surface of the dog hole 94 in the moving direction thereof and a large engaging force is generated between the dog 92 and the dog hole 94. In this manner, the state where a torque is transmitted to the rear wheel 115 via the transmission 5 from the crankshaft 2 is referred to as a driving state of the engine 107.

On the other hand, when the motorcycle 100 is decelerated without using a brake on a down-hill slope, for example, a torque of the drive shaft 5b is transmitted to the crankshaft 2. Specifically, the torque transmitted from the drive shaft 5b to the fixed gear 93 is further transmitted to the slide gear 91 and the main shaft 5a by the dog 92. In this case, as shown in Fig. 5(b), a rear side surface of the dog 92 in the moving direction thereof abuts against a rear side surface of the dog hole 94 in the moving direction thereof, and a large engaging force is generated between the dog 92 and the dog hole 94. In this manner, the state where a torque is transmitted from the rear wheel 115 to the crankshaft 2 via the transmission 5 is referred to as a driven state. The driven state of the engine 107 is the state of the engine 107 where so-called engine braking Is in operation.

When the state of the engine 107 is not either the driving state or the driven state, a torque is hardly transmitted between the crankshaft 2 and the drive shaft 5b. In this case, the rotation speed of the dog 92 and the rotation speed of the dog hole 94 are substantially equal to each other, so that a large engaging force is not generated between the dog 92 and the dog hole 94. Thus, as indicated by outlined arrows in Fig. 5(c), the dog 92 is movable in the rotation direction and the axial direction of the main shaft 5a with respect to the dog hole 94. In this manner, the state where a torque is not transmitted between the crankshaft 2 and the rear wheel 115 is referred to as a boundary state of the engine 107.

### [5] Driving Feeling of Rider during Shift Operation

As shown in Figs. 5(a) to 5(c), in the case where the dog 92 and the dog hole 94 are engaged, when the engine 107 is changed from the driving state or the driven state to the boundary state, the engaging force generated between the dog 92 and the dog hole 94 is reduced. Thus, it is possible to pull the dog 92 out of the dog hole 94 easily by moving the slide gear 91 away from the fixed gear 93. As such, In the present embodiment, when the shift operation is performed without the operation of the clutch lever 105a, the output of the engine 107 is suitably adjusted such that the engine 107 being in the driving state or the driven state is put in the boundary state.

In the case where the dog 92 is pulled out of the dog hole 94 when the engine 107 is put in the boundary state after the start of the shift operation, the slide gear 91 and the fixed gear 93 are separated from each other. Thereafter, when the engine 107 is continuously maintained in the boundary state by the output adjustment of the engine 107, the driving feeling of the rider may be degraded, The reason for this will be described together with the relationship between the fixed gear and the slide gear that are to be changed to the engaging state by the shift operation.

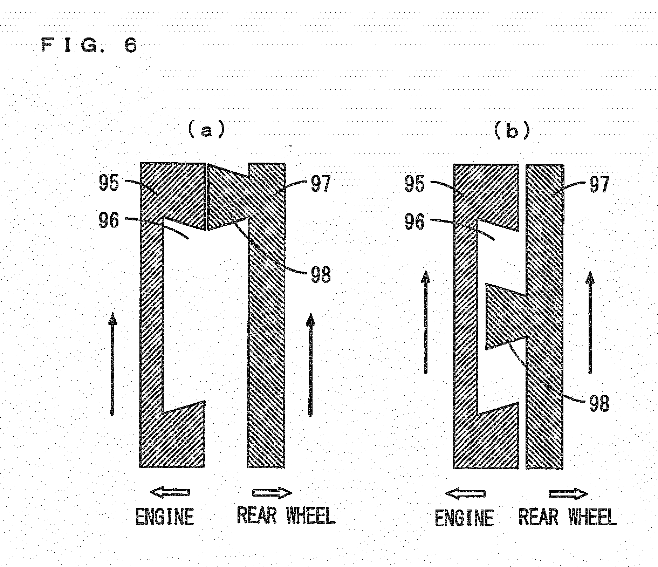

Figs. 6(a) and 6(b) are diagrams for explaining the reason why the driving feeling of the rider is degraded in the case where the engine 107 is maintained in the boundary state by the clutchless shifting. Figs. 6(a) and 6(b) show a fixed gear 95 and a slide gear 97 that are to be changed to the engaging state by the shift operation. More specifically, Figs. 6(a) and 6(b) show cross sectional views of a portion where the dog hole 96 is formed in the fixed gear 95 and a portion where the dog 98 is formed in the slide gear 97. The fixed gear 95 and the slide gear 97 of the present example correspond to the gears 5d1 and 5d2 of Fig. 3, respectively. Here, the portions shown in Figs. 6(a) and 6(b) of the fixed gear 95 and the slide gear 97 move (rotate) in a direction indicated by thick arrows. Further, the clutch 3 of Fig. 2 is in the connected state.

As described above, when the engine 107 being in the driving state or the driven state is changed to the boundary state, the rotation speeds of the slide gear 91 and the fixed gear 93 of Fig. 5 that are to be changed to the non-engaging state by the shift operation become substantially equal to each other. Thus, the rotation speeds of the fixed gear 95 and the slide gear 97 that are to be changed to the engaging state by the shift operation become substantially equal to each other.

Therefore, as shown in Fig. 6(a), when the dog 98 is misaligned with the dog hole 96, the dog 98 is not inserted into the dog hole 96 until a difference is generated between the rotation speed of the fixed gear 95 and the rotation speed of the slide gear 97. In this case, a time length required for the gear ratio to be changed Is prolonged. Thus, when the engine 107 is maintained in the boundary state, the rider does not acquire expected feeling of acceleration or deceleration corresponding to the accelerator opening. As a result, the driving feeling of the rider is degraded.

On the other hand, even when the dog 98 is inserted into the dog hole 96 in a relatively short length of time after the shift operation is started, the front side surface and the rear side surface of the dog 98 may be maintained not abutting against either of the front side surface and the rear side surface of the dog hole 96 as shown in Fig. 6(b). Also in this case, when the engine 107 is maintained in the boundary state, the rider does not acquire the expected feeling of acceleration or deceleration corresponding to the accelerator opening. As a result, the driving feeling of the rider is degraded.

As such, in the present embodiment, the output adjustment of the engine 107 is further carried out to inhibit degradation of the driving feeling of the driver after the engine 107 being in the driving state or the driven state is put in the boundary state.

### [6] Adjustment of Torque Generated in Crank Shaft 2

A torque corresponding to the state of the engine 107 is generated in the crankshaft 2 of the engine 107. In the present embodiment, the torque generated in the crankshaft 2 is adjusted by the output adjustment of the engine 107.

Here, the torque actually generated in the crankshaft 2 is referred to as an actual torque. The actual torque is determined by a rotation speed of the engine 107, a throttle opening, an amount of fuel injected by a below-mentioned injector 108 (Fig. 9), an ignition time point of a fuel-air mixture in a below-mentioned combustion chamber 73 (Fig. 9). The data indicating the relationship among a plurality of information pieces relating to the actual torque is generated in advance and stored in the ECU 50 of Fig. 1. Thus, the actual torque can be acquired based on the data and output signals of various sensors provided in the motorcycle 100.

In the following description, the data generated in advance for acquisition of the actual torque is referred to as actual torque acquisition data. The actual torque acquisition data is generated based on an experiment, simulation or the like for each type of the motorcycle 100, for example. The actual torque acquisition data includes the data indicating the relationship between the rotation speed of the engine 107 when no load is exerted and the throttle opening, for example.

In the present embodiment, the actual torque is acquired based on the actual torque acquisition data and the output signals of the crank sensor SE2 and the throttle sensor SE3. The value acquired as the actual torque is a value within a certain range (hereinafter referred to as a boundary range) that includes 0 and using 0 as a center value when the engine 107 is in the boundary state. Further, the value acquired as the actual torque is a positive value outside of the boundary range when the engine 107 is in the driving state, and is a negative value outside of the boundary range when the engine 107 is in the driven state.

Further, when the motorcycle 100 is traveling, the rider operates the accelerator grip in order to acquire a desired acceleration or deceleration state. At this time, the torque to be generated in the crankshaft 2 in order for the rider to acquire the required acceleration or deceleration state is referred to as a requirement torque. The requirement torque is determined by an operation amount of the accelerator grip and a rotation speed of the engine 107, for example. The data indicating the relationship among the plurality of information pieces relating to the requirement torque is generated in advance and stored in the ECU 50 of Fig. 1. Thus, the requirement torque can be acquired based on the data and the output signals of the various sensors provided in the motorcycle 100.

In the following description, the data generated in advance for acquisition of the requirement torque is referred to as requirement torque acquisition data. The requirement torque acquisition data is generated based on an experiment, simulation or the like for each type of the motorcycle 100, for example. The data indicating the relationship between the rotation speed of the engine 107 when no load is exerted and the accelerator opening, for example, is included in the requirement torque acquisition data.

In the present embodiment, the requirement torque is acquired based on the requirement torque acquisition data and the output signals of the accelerator sensor SE1 and the crank sensor SE2. The value acquired as the requirement torque is a positive value outside of the above-mentioned boundary range when the engine 107 is required to be changed to the driving state or maintained in the driving state, and is a negative value outside of the boundary range when the engine 107 is required by the rider to be changed to the driven state or be maintained in the driven state. Further, a value of the requirement torque is a value within the boundary range when the engine 107 is required by the rider to be changed to the boundary state or maintained in the boundary state.

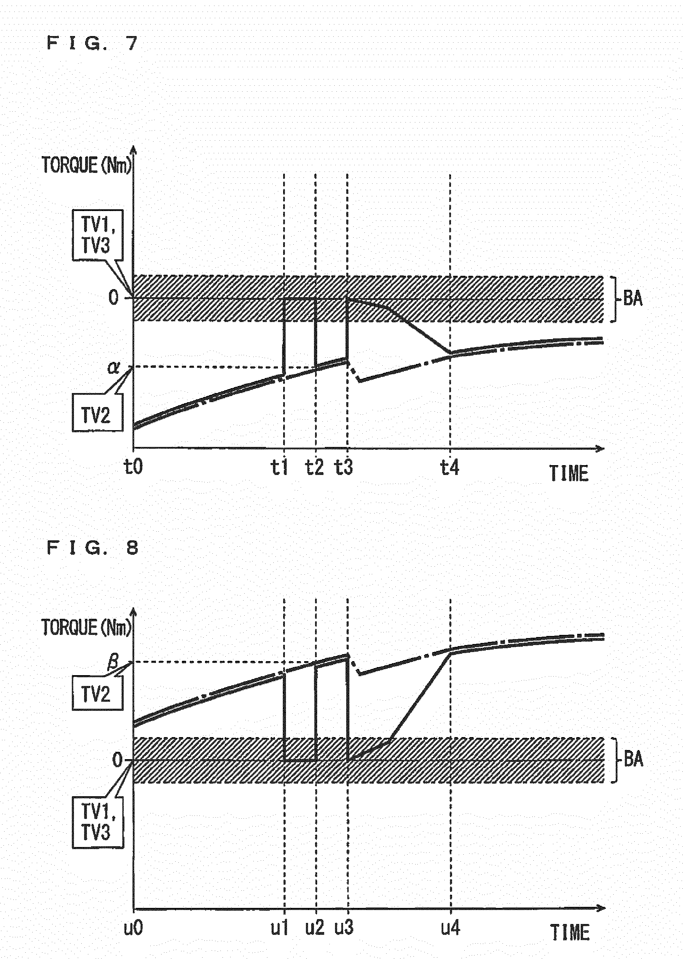

Fig. 7 is a diagram showing an example of adjustment of the actual torque in the case where the shift operation for the downshift is performed without the operation of the clutch lever 105a when the engine 107 is in the driven state. In Fig. 7, the ordinate indicates a torque, and the abscissa indicates time. Further, the actual torque is indicated by a thick solid line, and the requirement torque is indicated by a thick one-dot and dash line.

From a time point t0 to a time point t1, the engine 107 operates at a rotation speed corresponding to an accelerator opening. At this time, the actual torque and the requirement torque both indicate negative values, and are maintained to be equal to each other or substantially equal to each other. At the time point t1, the rider starts the shift operation for the downshift. In this case, the output adjustment of the engine 107 is carried out such that the actual torque is increased to a predetermined first target value TV1. In the example of Fig. 7, the first target value TV1 is set to 0. The first target value TV1 may be set to a value within the boundary range BA as indicated by hatching in Fig. 7. The boundary range BA can be acquired by calculation of the value of the actual torque generated in the crankshaft 2 when the engine 107 is in the boundary state, for example, by an experiment, simulation or the like.

When the actual torque is adjusted to the first target value TV1, the engine 107 is changed to the boundary state from the driven state regardless of the requirement torque. Thus, at the time point t2, the dog is pulled out of the dog hole between the two gears being in the engaging state, and the transmission 5 is switched not to transmit a torque. When the engine 107 is continuously maintained in the boundary state in this manner, the driving feeling of the rider is degraded as described above. As such, in the present embodiment, when the transmission 5 is switched not to transmit a torque, the output adjustment of the engine 107 is carried out such that the actual torque becomes a second target value TV2 that is different from the first target value TV1.

The second target value TV2 is set to a value outside of the boundary range BA. Further, the second target value TV2 is set to a positive value in the case where the value of a requirement torque is a positive value when the transmission 5 is changed not to transmit a torque. The second target value TV2 is set to a negative value in the case where the value of a requirement torque is a negative value when the transmission 5 is changed not to transmit a torque.

In the example of Fig. 7, the second target value TV2 is set to a value α that is a negative value and smaller than the lower limit value of the boundary range BA. The value α is the value of a requirement torque at a time point t2. In the example of Fig. 7, the second target value TV2 may be set to a value smaller than the value of the requirement torque at the time point t2.

When the actual torque is adjusted from the first target value TV1 to the second target value TV2, a difference is generated between the rotation speeds of the two gears that are to be changed to the engaging state. Thus, as for the two gears that are to be changed to the engaging state, when one gear is brought closer to the other gear, the dog is inserted into the dog holes in a short length of time. Further, one of the front side surface and the rear side surface of the dog abuts against one of the front side surface and the rear side surface of the dog hole in a short length of time. Thus, the engine 107 is changed from the boundary state to the driven state in a short length of time.

Thus, when the engagement of the two gears that are to be changed to the engaging state is completed at a time point t3, the output adjustment of the engine 107 is carried out such that the actual torque is increased to a third target value TV3 that is closer to the first target value TV1 than the second target value TV2.

In the example of Fig. 7, the third target value TV3 is set to 0 that is equal to the first target value TV1. The third target value TV3 may be set to a value different from the first target value TV1. In this case, the third target value TV3 is preferably set to a value within the boundary range BA. In this manner, the engagement of the two gears that are to be changed to the engaging state is completed, and the actual torque is adjusted to the third target value TV3. Therefore, the engine 107 is changed to the boundary state again.

Thus, instantaneous generation of a large engaging force in the two gears that have been changed to the engaging state as the engagement is completed is inhibited. Therefore, an occurrence of shift shock is prevented, and degradation of the driving feeling of the rider is inhibited.

Subsequently, the output adjustment of the engine 107 is carried out such that the actual torque gradually becomes closer to the requirement torque. In the example of Fig. 7, the actual torque is gently reduced to become closer to the requirement torque from the time point t3 to a time point t4. At the time point t4, the actual torque is substantially equal to the requirement torque. Thus, degradation of the driving feeling of the rider right after an operation of switching the gear position is completed is inhibited. Thereafter, the actual torque and the requirement torque are maintained equal to or substantially equal to each other similarly to the state before clutchless shifting.

Fig. 8 is a diagram showing an example of the adjustment of the actual torque in the case where the shift operation for the upshift is performed without an operation of the clutch lever 105a when the engine 107 is in the driving state. In Fig. 8, the ordinate indicates the torque, and the abscissa indicates the time similarly to the example of Fig. 7. Further, the actual torque is indicated by a thick solid line, and the requirement torque is indicated by a thick one-dot and dash line.

In the example of Fig. 8, except that the value of an actual torque and the value of a requirement torque indicate positive values, the output adjustment of the engine 107 is carried out substantially similarly to the example of Fig. 7. Specifically, from a time point u0 to u1, the engine 107 operates at a rotation speed corresponding to an accelerator opening. At this time, the actual torque and the requirement torque both indicate positive values, and are maintained equal or substantially equal to each other. When the shift operation for the upshift is started by the rider at the time point u1, the output adjustment of the engine 107 is carried out such that the actual torque is reduced to the first target value TV1. Thus, the engine 107 is changed from the driven state to the boundary state regardless of the requirement torque.

At a time point u2, when the transmission 5 is switched not to transmit a torque, the output adjustment of the engine 107 is carried out such that the actual torque becomes a second target value TV2 that is different from the first target value TV1. In the example of Fig. 8, the second target value TV2 is set to a value β that is a positive value and larger than the upper limit value of the boundary range BA. The value β is the value of the requirement torque at the time point u2. In the example of Fig. 8, the second target value TV2 may be set to a value larger than the value of the requirement torque at the time point u2.

The actual torque is adjusted from the first target value TV1 to the second target value TV2, whereby the engine 107 is changed from the boundary state to the driving state in a short length of time. The engagement of the two gears that are to be changed to the engaging state is completed at a time point u3. Thus, the output adjustment of the engine 107 is carried out such that the actual torque is reduced to a third target value TV3. Thus, instantaneous generation of a large engaging force between the two gears as the engagement is completed is inhibited. Therefore, an occurrence of shift shock is prevented, and degradation of the driving feeling of the rider is inhibited.

Subsequently, the output adjustment of the engine 107 is carried out such that the actual torque gradually becomes closer to the required toque. In the example of Fig. 8, the actual torque is increased gently to become closer to the requirement torque from the time point u3 to a time point u4. At the time point u4, the actual torque is substantially equal to the requirement torque. Thus, degradation of the driving feeling of the rider right after an operation of switching the gear position is completed is inhibited. Thereafter, the actual torque and the requirement torque are maintained substantially equal to each other similarly to the state before the clutchless shifting.

### [7] Condition for Carrying out Output Adjustment of Engine 107

A rider who is skilled at clutchiess shifting can adjust the output of the engine 107 manually by adjusting the accelerator opening such that an actual torque suitable for the change of the gear ratio of the transmission 5 is generated in the crankshaft 2. In this manner, in the case where the skilled rider performs the shift operation, when the output adjustment of the engine 107 is carried out automatically, the driving feeling of the rider may be degraded.

As such, in the motorcycle 100 according to the present embodiment, whether the automatic output adjustment of the engine 107 is to be carried out is determined according to the value of a requirement torque at a time point at which the shift operation is performed.

Specifically, the output adjustment of the engine 107 is not carried out in the case where the value of a requirement torque is within the above-mentioned boundary range at a time point at which the shift operation is started. In this case, because the value of a requirement torque is close to the first target value TV1, the value of an actual torque is close to the first target value TV1. Thus, even when the output adjustment of the engine 107 is not carried out, the transmission 5 is smoothly switched not to transmit a torque.

On the other hand, when the value of a requirement torque is not within the boundary range BA, whether the output adjustment of the engine 107 is to be carried out is further determined according to a combination of the type of a shift operation and the value of an actual torque.

Specifically, in the case where the shift operation for the downshift is performed, the output adjustment of the engine 107 is carried out when the actual torque is a negative value, and not carried out when the actual value is a positive value. That is, the output adjustment of the engine 107 for the downshift is carried out when the engine 107 is in the driven state, and not carried out when the engine 107 is in the driving state. Therefore, because an occurrence of the rapid switch from the driving state to the driven state right after the downshift is prevented, so that application of an excessive load to the transmission 5 is prevented. Thus, the useful life of the transmission 5 is prolonged.

Further, in the case where the shift operation for upshift is performed, the output adjustment of the engine 107 is carried out when the actual torque is a positive value, and not performed when the actual torque is a negative value. That is, the output adjustment of the engine 107 for the upshift is carried out when the engine 107 is in the driving state, and not carried out when the engine 107 is in the driven state. Thus, when the engine 107 is in the driven state, a speed of the motorcycle 100 is prevented from increasing rapidly.

### [8] Engine 107 and Its Peripheral Members, and Control System of Motorcycle 100

Fig. 9 is a diagram showing schematic configurations of the engine 107 and its peripheral members, and the control system of the motorcycle 100. As shown in Fig. 9, the engine 107 has a cylinder 71, and a piston 72 is provided in the cylinder 71 to be reciprocatable. Further, a combustion chamber 73 is formed in an upper portion of the cylinder 71. The combustion chamber 73 communicates with the outside of the engine 107 through an intake port 74 and an exhaust port 75.

An intake valve 76 is provided at an opening end 74a positioned in the downstream of the intake port 74 to be openable and closeable, and an exhaust valve 77 is provided at an opening end 75a positioned in the upstream of the exhaust port 75 to be openable and closeable. The intake valve 76 and the exhaust valve 77 are driven by a normal cam mechanism. An ignition plug 78 Is provided in an upper portion of the combustion chamber 73.

The intake pipe 79 is attached to the engine 107 to be connected to the intake port 74, and the exhaust pipe 118 is attached to the engine 107 to be connected to the exhaust port 75. An injector 108 for supplying the fuel into the cylinder 71 is provided in the intake pipe 79. Further, an ETV 82 is provided in the intake pipe 79.

When the engine 107 is in operation, air is taken into the combustion chamber 73 from the intake port 74 through the intake pipe 79, and the fuel is supplied into the combustion chamber 73 by the injector 108. Thus, a fuel-air mixture is generated in the combustion chamber 73, and spark ignition of the fuel-air mixture is carried out by the ignition plug 78. The burned gas generated by the combustion of the fuel-air mixture in the combustion chamber 73 is exhausted from the exhaust port 75 through the exhaust pipe 118.

In the ECU 50, the CPU executes the control program stored in the ROM as described above. Thus, functions of a storage 51, an operation determiner 52, a dog determiner 53, a requirement torque acquirer 54, a torque determiner 55, an actual torque acquirer 56 and an adjustor 57 are implemented. Part or all of the configurations of each function implemented in the ECU 50 may be implemented by hardware such as electronic circuits.

The storage 51 is constituted by part of storage regions of the ROM and the RAM, for example, and stores the information relating to the first to third target values TV1 to TV3, the actual torque acquisition data and the requirement torque acquisition data. The information relating to the first and third target values TV1, TV3 of the present example is values (0, for example) of the first and third target values TV1, TV3. The information relating to the second target value TV2 includes the information indicating that the second target value TV2 is to be the value of the requirement torque. Further, the storage 51 stores a load threshold value and stores a plurality of reference angle values of the shift cam 7b respectively corresponding to a plurality of gear positions of the gear of the transmission 5.

The operation determiner 52 determines whether any one of the shift operation for the upshift and the shift operation for the downshift has been performed based on an output signal from the load sensor SE5 and the load threshold value. Specifically, when the absolute value of a detection value of the load exceeds the load threshold value, and the detection value is a positive value, the operation determiner 52 determines that the shift operation for the upshift has been performed. On the other hand, when the absolute value of a detection value of the load exceeds the load threshold value, and the detection value is a negative value, the operation determiner 52 determines that the shift operation for the downshift has been performed. On the other hand, when a detection value of the load does not exceed the load threshold value, the operation determiner 52 determines that the shift operation has not been performed.

When the shift operation is performed, the dog determiner 53 determines what state the relationship between the dog and the dog hole of the two gears that are to be changed to the non-engaging state is in based on an output signal from the shift cam sensor SE4 and a plurality of reference angle values. Further, the dog determiner 53 determines what state the relationship between the dog and the dog hole of the two gears that are to be changed to the engaging state is in.

Specifically, when a detection value (voltage value) of a rotation angle of the shift cam 7b changes by a predetermined angle from one reference angle value, the dog determiner 53 determines that the dog has been pulled out of the dog hole between the two gears that are to be changed to the non-engaging state. On the other hand, when a detection value of a rotation angle has not changed by the predetermined angle from the one reference angle value, the dog determiner 53 determines that the dog has not been pulled out of the dog hole between the two gears that are to be changed to the non-engaging state.

Further, when the detection value of a rotation angle of the shift cam 7b reaches another reference angle value after changing by the predetermined angle from the one reference angle, the dog determiner 53 determines that the dog has been inserted into the dog hole between the two gears that are to be changed to the engaging state. On the other hand, when the detection value of the rotation angle has not reached the other reference angle value after changing by the predetermined angle from the one reference angle value, the dog determiner 53 determines that the dog has not been inserted into the dog hole between the two gears that are to be changed to the engaging state.

The requirement torque acquirer 54 acquires a requirement torque based on output signals from the accelerator sensor SE1 and the crank sensor SE2, and the requirement torque acquisition data. The torque determiner 55 determines whether the requirement torque acquired by the requirement torque acquirer 54 is within the predetermined boundary range BA.

The actual torque acquirer 56 acquires an actual torque based on output signals from the crank sensor SE2 and the throttle sensor SE3 and the actual torque requirement data. In addition to the output signals of these sensors and the actual torque acquisition data, the actual torque acquirer 56 may acquire an actual torque based on an amount of fuel injected by the injector 108 and an ignition time point of the fuel-air mixture. In this case, the actual torque acquirer 56 acquires an amount of fuel injected by the injector 108 and an ignition time point of the fuel-air mixture from a below-mentioned adjustor 57.

When the shift operation is not performed, the adjustor 57 adjusts a throttle opening of the ETV 82 such that the actual torque coincides with or substantially coincides with the requirement torque. On the other hand, when the shift operation is performed without the operation of the clutch lever 105a, the adjustor 57 determines whether the output adjustment of the engine 107 is to be carried out based on a type of the shift operation, a result of determination of whether the requirement torque is within the predetermined boundary range BA and a value of an actual torque.

Further, the adjustor 57 adjusts an actual torque by the output adjustment of the engine 107. Specifically, the adjustor 57 adjusts the actual torque to the first target value TV1 such that the engaging force between the two gears that are to be changed to the non-engaging state by the shift operation is reduced. Further, the adjustor 57 adjusts the actual torque to the second target value TV2 such that the two gears that are to be changed to the engaging state by the shift operation are engaged. Further, after the two gears that are to be changed to the engaging state are engaged, the adjustor 57 adjusts the actual torque to the third target value TV3. Finally, the actual torque is adjusted by the adjustor 57 to gradually become closer to the requirement torque from the third target value TV3.

### [9] Control Operation in ECU 50

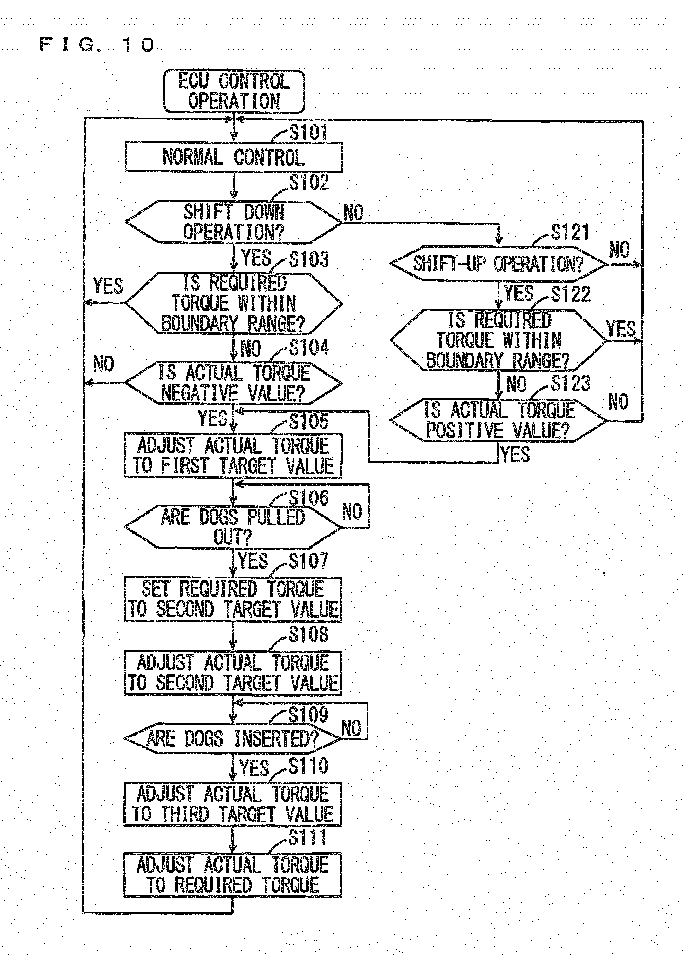

Fig. 10 is a flow chart showing one example of a control operation in the ECU 50. The control operation described below is started when the engine 107 being in the stop state is operated, and is finished when the engine 107 being in the operation state is stopped.

During the below-mentioned control operation, the requirement torque acquirer 54 and the actual torque acquirer 56 of Fig. 9 respectively acquire a requirement torque and an actual torque in a certain time length that is about 10 msec, for example.

When the control operation is started, the adjustor 57 adjusts a throttle opening of the ETV 82 according to the accelerator opening detected by the accelerator sensor SE1 as a normal control process (step S101). Thus, the output of the engine 107 is adjusted to the value corresponding to the accelerator opening.

Next, the operation determiner 52 determines whether the shift operation for the downshift has been performed (step S102). When the shift operation for the downshift is performed, the torque determiner 55 determines whether the value of the latest requirement torque acquired by the requirement torque acquirer 54 is within the boundary range BA (step S103). When the value of the requirement torque is not within the boundary range BA, the adjustor 57 determines whether the value of the latest actual torque acquired by the actual torque acquirer 56 is a negative value (step S104). This process corresponds to the process of determining whether the engine 107 is in the driven state.

In the step S102, when the shift operation for the downshift has not been performed, the operation determiner 52 determines whether the shift operation for the upshift has been performed (step S121). When the shift operation for the upshift has not been performed, the adjustor 57 returns to the process of the step S101. When the shift operation for the upshift has been performed, the torque determiner 55 determines whether the value of the latest requirement torque that is acquired by the requirement torque acquirer 54 is within the boundary range BA (step S122). When the value of the requirement torque is not within the boundary range BA, the adjustor 57 determines whether the value of the latest actual torque acquired by the actual torque acquirer 56 is a positive value (step S123). This process corresponds to the process of determining whether the engine 107 is in the driving state.

When the actual torque is a negative value in the step S104, or when the actual torque is a positive value in the step S123, the adjustor 57 adjusts the actual torque to the first target value TV1 by the output adjustment of the engine 107 (step S105). While being set to 0, for example, the first target value TV1 may be set to a value other than 0 and within the boundary range BA.

Then, the dog determiner 53 determines whether the dog has been pulled out of the dog hole between the two gears that are to be changed to the non-engaging state by the shift operation (step S106). When the dog has not been pulled out of the dog hole between the two gears that are to be changed to the non-engaging state, the dog determiner 53 repeats the process of the step S106. On the other hand, when the dog has been pulled out of the dog hole, the adjustor 57 sets the second target value TV2 to the value of a latest requirement torque acquired by the requirement torque acquirer 54 (step S107). The second target value TV2 may be set to a predetermined value outside of the boundary range BA instead of being set to the value of the requirement torque. In this case, the predetermined value may be stored in the storage 51 as the second target value TV2.

In the case where the predetermined value is stored in the storage 51 as the second target value TV2, when the latest requirement torque is a negative value, the acquirer 57 makes the predetermined value a negative value, and sets the negative predetermined value as the second target value TV2. Alternatively, when the latest requirement torque is a positive value, the adjustor 57 makes the predetermined value a positive value, and sets the positive predetermined value as the second target value TV2.

Next, the adjustor 57 adjusts the actual torque to the second target value TV2 by the output adjustment of the engine 107 (step S108). Thereafter, the dog determiner 53 determines whether the dog has been inserted into the dog hole between the two gears that are to be changed to the engaging state by the shift operation (step S109). When the dog is not inserted into the dog hole between the two gears that are to be changed to the engaging state, the dog determiner 53 repeats the process of the step S107. On the other hand, when the dog is inserted into the dog hole, it is considered that the two gears that are to be changed to the engaging state by the shift operation are engaged with each other.

As such, the adjustor 57 adjusts the actual torque to the third target value TV3 by the output adjustment of the engine 107 (step S110). While being set to the value equal to the first target value TV1, for example, as described above, the third target value TV3 may be set to a value other than the first target value TV1 and within the boundary range BA.

Thereafter, the actual torque is adjusted by the adjustor 57 to gradually become closer to the requirement torque by the output adjustment of the engine 107 (step S111), and the adjustor 57 returns to the process of the step S101.

In the above-mentioned steps S103, S122, when the value of the requirement torque is within the boundary range BA, the adjustor 57 returns to the process of the step S101, Therefore, in the case where the engine 107 is in the boundary state during the shift operation, the output adjustment of the engine 107 is prevented from being carried out automatically.

Further, when the actual torque is a positive value in the above-mentioned step S104, or when the actual torque is a negative value in the step S123, the adjustor 57 returns to the process of the step S101. In these cases, the output adjustment of the engine 107 is not carried out. That is, the output adjustment of the engine 107 for the downshift is not carried out when the engine 107 is in the driving state. Further, the output adjustment of the engine 107 for the upshift is not carried out when the engine 107 is in the driven state.

While acquiring a requirement torque in a certain time length in the above-mentioned example, the requirement torque acquirer 54 may acquire a requirement torque every time a process that uses the requirement torque is performed, While acquiring an actual torque in a certain time length, the actual torque acquirer 56 may acquire an actual torque every time a process that requires the actual torque is performed.

### [10] Effects of Embodiment

(a) In the above-mentioned motorcycle 100, when the shift operation is performed without the operation of the clutch lever 105a, the actual torque Is adjusted to the first target value TV1. Thus, the engaging force of the two gears being in the engaging state is reduced during the shift operation, and the two gears are changed to the non-engaging state. Thereafter, the actual torque is adjusted to the second target value TV2. In this case, a difference is generated between the rotation speeds of the two gears that are to be changed to the engaging state, whereby the two gears are engaged in a short length of time. Thus, the vehicle is inhibited from being kept traveling with the torque of the engine 107 not transmitted to the rear wheel 115 by the transmission 5. As a result, degradation of the driving feeling during the switch of the gear of the transmission 5 is inhibited.
(b) In the above-mentioned example, the second target value TV2 is set to a positive value when the requirement torque is a positive value, and the second target value TV2 is set to a negative value when the requirement torque is a negative value.
   When the two gears that are to be changed to the engaging state by the shift operation are engaged, a direction in which the engaging force generated between these two gears is exerted when the actual torque is a positive value is different from a direction in which the engaging force generated between these two gears is exerted when the actual torque is a negative value. In the above-mentioned configuration, the plus-minus sign of the second target value TV2 is set to coincide with the plus-minus sign of the requirement torque. Therefore, an engaging force exerted in the appropriate direction can be generated between these two gears after the two gears that are to be changed to the engaging state are engaged. Therefore, the load applied to the gears of the transmission 5 can be reduced.
(c) In the above-mentioned example, the second target value TV2 is set to the requirement torque. In this case, the two gears being in the engaging state before the shift operation are separated from each other, and then a relatively large difference in rotation speed can be generated between the two gears that are to be changed to the engaging state. Therefore, the two gears that are to be changed to the engaging state can be engaged in a short length of time.

### [11] Other Embodiments

(a) While the shift operation for the upshift and the shift operation for the downshift are respectively subjects of determination by the operation determiner 52 in the above-mentioned embodiment, the present invention is not limited to this. Only the shift operation for one of the upshift and the downshift may be a subject of determination by the operation determiner 52. In this case, in the control operation of Fig. 10, it is no longer necessary to perform one process out of the process from the steps S102 to S104 and the process from the steps S121 to S123.
(b) In the above-mentioned embodiment, the upshift is carried out when the shift pedal 210 is lifted up, and the downshift is carried out when the shift pedal 210 is pushed down. However, the present invention is not limited to this.
   The shift mechanism 7 may be configured such that the upshift is carried out when the shift pedal 210 is pushed down, and may be configured such that the downshift is carried out when the shift pedal 210 is lifted up.
(c) While the output adjustment of the engine 107 is not carried out when the value of the requirement torque is within the boundary range BA during the shift operation in the above-mentioned embodiment, the present invention is not limited to this. The output adjustment of the engine 107 may be carried out even when the value of the requirement torque is within the boundary range BA at a time point at which the shift operation is started.
   Further, in the above-mentioned embodiment, the output adjustment of the engine 107 for the downshift is carried out when the actual torque is a negative value, and not carried out when the actual torque is a positive value. However, the present invention is not limited to this. The output adjustment of the engine 107 for the downshift may be carried out when the actual torque is a positive value. In other words, the output adjustment of the engine 107 for the downshift is not limited to be carried out only when the engine 107 is in the driven state, but may be carried out when the engine 107 is in the driving state.
   Further, in the above-mentioned embodiment, the output adjustment of the engine 107 for the upshift is carried out when the actual torque is a positive value, and not carried out when the actual torque is a negative value. However, the present invention is not limited to this. The output adjustment of the engine 107 for the upshift may be carried out when the actual torque is a negative value. In other words, the output adjustment of the engine 107 for the upshift is not limited to be carried out only when the engine 107 is in the driving state, and may be carried out when the engine 107 is in the driven state.
(d) In the above-mentioned embodiment, whether the dog has been pulled out of the dog hole is determined based on the output signal from the shift cam sensor SE4 and the plurality of reference angle values after the actual torque is adjusted to the first target value TV1. However, the present invention is not limited to this.
   A time length (hereinafter referred to as a pull-out time length) from the time when the process of adjusting the actual torque to the first target value TV1 is started until the time when the dog is pulled out of the dog hole between the two gears that are to be changed to the non-engaging state can be estimated to some extent based on an experiment, simulation or the like.
   Thus, a pre-estimated pull-out time length may be stored in the storage 51 of Fig. 9. In this case, in the process of the step S106 of Fig. 10, the dog determiner 53 of Fig. 9 can determine at the time point at which the pull-out time length has elapsed since the time point at which the process of adjusting the actual torque to the first target value TV1 is started that the dog has been pulled out of the dog holes.
   The above-mentioned pull-out time length may be determined according to a value of the actual torque at the time point at which the control of adjusting the actual torque to the first target value TV1 is started. For example, the larger the absolute value of the actual torque is, the longer the pull-out time length may be set, and the smaller the absolute value of the actual torque is, the shorter the pull-out time length may be set. In this case, the data indicating the relationship between the actual torque and the pull-out time length is stored in the storage 51.
(e) In the above-mentioned embodiment, whether the dog has been inserted into the dog hole is determined based on the output signal from the shift cam sensor SE4 and the plurality of reference angle values after the actual torque is adjusted to the second target value TV2. However, the present invention is not limited to this.
   A time length (hereinafter referred to as an insertion time length) from the time when the process of adjusting the actual torque to the second target value TV2 is started until the time when the dog is inserted into the dog hole between the two gears that are to be changed to the engaging state can be estimated to some extent based on an experiment, simulation or the like.
   As such, a pre-estimated insertion time length may be stored in the storage 51 of Fig. 9. In this case, in the process of the step S109 of Fig. 10, the dog determiner 53 of Fig. 9 can determine that the dog is pulled out of the dog hole at a time point at which the insertion time length has elapsed from a time point at which the process right before the adjustment of the actual torque to the second target value TV2 is started.
   The above-mentioned insertion time length may be determined according to the value of the actual torque at the time point at which the control of adjusting the actual torque to the second target value TV2 is started. For example, the larger the absolute value of the actual torque is, the shorter the insertion time length may be set, and the smaller the absolute value of the actual torque is, the longer the insertion time length may be set. In this case, the data indicating the relationship between the actual torque and the insertion time length is stored in the storage 51.
(f) While the requirement torque is acquired based on the operation amount of the accelerator grip and the rotation speed of the engine 107, and the requirement torque acquisition data in the above-mentioned embodiment, the present invention is not limited to this. The requirement torque basically corresponds to the rotation speed of the engine 107. Therefore, the requirement torque may be acquired based on the rotation speed of the engine 107 and the requirement torque acquisition data. In this case, the requirement torque acquisition data includes the data indicating the relationship between the rotation speed of the engine 107 when no load is exerted and the requirement torque, for example. Thus, the process of acquiring the requirement torque is simplified.
(g) While the above-mentioned embodiment is an example in which the present invention is applied to the motorcycle, the invention is not limited to this. The present invention may be applied to another straddled vehicle such as a four-wheeled automobile, a motor tricycle or an ATV (All Terrain Vehicle).

### [12] Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the motorcycle 100 is an example of a straddled vehicle, the engine 107 is an example of an engine, the rear wheel 115 is an example of a drive wheel, and the transmission 5 is an example of a transmission.

Further, the two gears (the gears 5c1, 5c2)(the slide gear 91 and the fixed gear 93) that are to be changed to the non-engaging state by the shift operation out of the plurality of gears of the transmission 5 are examples of first and second gears, and the two gears (the gears 5d1, 5d2)(the fixed gear 95 and the slide gear 97) that are to be changed to the engaging state by the shift operation out of the plurality of gears of the transmission 5 are examples of third and fourth gears.

Further, the first target value TV1 is an example of a first target value, the second target value TV2 is an example of a second target value, the third target value TV3 is an example of a third target value, the adjustor 57 is an example of a torque adjustor, the requirement torque acquirer 54 is an example of a requirement torque acquirer, the boundary range BA is an example of a predetermined range including the first target value, and the torque determiner 55 is an example of a determiner.

## Claims

1. A straddled vehicle comprising:
an engine (107);
a drive wheel;
a transmission (5) that transmits a torque generated by the engine (107) to the drive wheel; and
a torque adjustor (57) that adjusts the torque generated in a crankshaft (2) of the engine (107) to a first target value (TV1) such that an engaging force of first and second gears, to be changed from an engaging state where the first and second gears are engaged with use of a dog (92) to a non-engaging state where the first and second gears are not engaged with the use of the dog (92), is reduced in the transmission (5), and adjusts the torque generated in the crankshaft (2) of the engine (107) to a second target value (TV2) different from the first target value (TV1) after the first and second gears are changed to the non-engaging state such that third and fourth gears, to be changed from the non-engaging state where the third and fourth gears are not engaged with use of another dog (98) to the engaging state where the third and fourth gears are engaged with the use of the other dog (98), is changed to the engaging state in the transmission (5),
wherein the first target value (TV1) is a value within a predetermined boundary range that corresponds to the engine (107) being in a boundary state where an engaging force generated between the dog (98) and a dog hole (94) is reduced, and
the second target value (TV2) is a value outside of the boundary range, wherein the boundary range is a range of a certain width including zero.

2. A straddled vehicle according to claim 1, wherein
the torque adjustor (57) adjusts the torque generated in the crankshaft (2) of the engine (107) to a third target value (TV3) within the boundary range after the third and fourth gears are changed to the engaging state such that the torque becomes closer to the first target value (TV1).

3. A straddled vehicle according to claim 2, further comprising a requirement torque acquirer (54) that acquires a requirement torque to be generated in the crankshaft (2) of the engine (107) in correspondence with a rotation speed of the engine (107), wherein
the torque adjustor (57) adjusts the torque generated in the crankshaft (2) of the engine (107) such that the torque generated in the crankshaft (2) gradually becomes closer from the third target value (TV3) to the requirement torque acquired by the requirement torque acquirer (54).

4. A straddled vehicle according to claim 3, further comprising a determiner (55) that determines whether the requirement torque acquired by the requirement torque acquirer (54) is within the boundary range including the first target value (TV1) in response to a shift operation for a change of a gear ratio of the transmission (5), wherein
the torque adjustor (57) adjusts the torque generated in the crankshaft (2) of the engine (107) when it is determined that the acquired requirement torque is not within the boundary range, and does not adjust the torque generated in the crankshaft (2) of the engine (107) when it is determined that the acquired requirement torque is within the boundary range.

5. A straddled vehicle according to claim 3 or 4, wherein
the torque adjustor (57) sets the second target value (TV2) to a positive value when the acquired requirement torque is a positive value, and sets the second target value (TV2) to a negative value when the acquired requirement torque is a negative value.

6. A straddled vehicle according to claim 4 or 5, wherein
the torque adjustor (57) sets the second target value (TV2) to the requirement torque acquired by the requirement torque acquirer (54).

## Patentansprüche

1. Zweirad, umfassend:
eine Maschine (107);
ein Antriebsrad;
ein Getriebe (5), das ein von der Maschine (107) erzeugtes Drehmoment auf das Antriebsrad überträgt; und
einen Drehmomenteinsteller (57), der das in einer Kurbelwelle (2) der Maschine (107) erzeugte Drehmoment auf einen ersten Sollwert (TV1) einstellt, so dass eine Eingriffskraft des ersten und zweiten Gangs, die aus einem Einrückzustand, in dem der erste und der zweite Gang unter Verwendung eines Mitnehmers (92) in Eingriff sind, in einen nicht eingerückten Zustand, in dem der erste und der zweite Gang unter Verwendung des Mitnehmers (92) nicht in Eingriff sind, in der Übersetzung (5) reduziert wird, und das in der Kurbelwelle (2) der Maschine (107) erzeugte Drehmoment auf einen zweiten Sollwert (TV2) einstellt, der sich von dem ersten Sollwert (TV1) unterscheidet, nachdem der erste und der zweite Gang in den nicht einrückenden Zustand geschaltet wurden, so dass der dritte und der vierte Gang, die aus dem nicht einrückenden Zustand, in dem der dritte und der vierte Gang nicht mit Hilfe eines weiteren Mitnehmers (98) in Eingriff sind, in den eingerückten Zustand, in dem der dritte und vierte Gang unter Verwendung des anderen Mitnehmers (98) eingerückt sind, in den Eingriffszustand in dem Getriebe (5) geändert wird,
wobei der erste Sollwert (TV1) ein Wert innerhalb eines vorbestimmten Grenzbereichs ist, der der Maschine (107) entspricht, die sich in einem Grenzzustand befindet, in dem eine zwischen dem Mitnehmer (98) und einem Mitnehmerloch (94) erzeugte Eingriffskraft verringert ist, und
der zweite Sollwert (TV2) ein Wert außerhalb des Grenzbereichs ist, wobei der Grenzbereich ein Bereich einer bestimmten Breite einschließlich Null ist.

2. Zweirad nach Anspruch 1, bei dem
der Drehmomenteinsteller (57) das in der Kurbelwelle (2) der Maschine (107) erzeugte Drehmoment auf einen dritten Sollwert (TV3) innerhalb des Grenzbereichs einstellt, nachdem der dritte und vierte Gang in den Einrückzustand geschaltet wurden, so dass sich das Drehmoment dem ersten Sollwert (TV1) nähert.

3. Zweirad nach Anspruch 2, weiterhin umfassend einen Anforderungsdrehmomentbezieher (54), der ein Anforderungsdrehmoment bezieht, das in der Kurbelwelle (2) der Maschine (107) entsprechend einer Drehzahl der Maschine (107) erzeugt werden soll, wobei
der Drehmomenteinsteller (57) das in der Kurbelwelle (2) der Maschine (107) erzeugte Drehmoment so einstellt, dass das in der Kurbelwelle (2) erzeugte Drehmoment allmählich von dem dritten Sollwert (TV3) näher an das von erfasste Anforderungsdrehmoment heranrückt, das von dem Anforderungsdrehmomentbezieher (54) bezogen wird.

4. Zweirad nach Anspruch 3, weiterhin umfassend einen Bestimmer (55), der, ob das von dem Anforderungsdrehmomentbezieher (54) bezogene Anforderungsdrehmoment innerhalb des Grenzbereichs liegt, der den ersten Sollwert (TV1) umfasst, als Reaktion auf einen Schaltvorgang einer Änderung eines Übersetzungsverhältnisses des Getriebes (5) bestimmt, wobei
der Drehmomenteinsteller (57) das in der Kurbelwelle (2) der Maschine (107) erzeugte Drehmoment einstellt, wenn bestimmt wird, dass das bezogene Anforderungsdrehmoment nicht innerhalb des Grenzbereichs liegt, und das in der Kurbelwelle (2) erzeugte Drehmoment der Maschine (107) nicht einstellt, wenn bestimmt wird, dass das erfasste Anforderungsdrehmoment innerhalb des Grenzbereichs liegt.

5. Zweirad nach Anspruch 3 oder 4, bei dem der Drehmomenteinsteller (57) den zweiten Sollwert (TV2) auf einen positiven Wert setzt, wenn das bezogene Anforderungsdrehmoment ein positiver Wert ist, und den zweiten Sollwert (TV2) auf einen negativen Wert einstellt, wenn das bezogene Anforderungsdrehmoment ein negativer Wert ist.

6. Zweirad nach Anspruch 4 oder 5, bei dem der Drehmomenteinsteller (57) den zweiten Sollwert (TV2) auf das von dem Anforderungsdrehmomenterzeuger (54) bezogene Anforderungsdrehmoment einstellt.

## Revendications

1. Véhicule à enfourcher comprenant :
un moteur (107) ;
une roue motrice ;
une transmission (5) qui transmet un couple généré par le moteur (107) à la roue motrice ; et
un ajusteur de couple (57) qui ajuste le couple généré par un vilebrequin (2) du moteur (107) à une première valeur cible (TV1) de telle sorte qu'une force d'engagement de premier et deuxième engrenages, à passer d'un état d'engagement où les premier et deuxième engrenages sont engagés à l'aide d'un crabot (92) à un état de non-engagement où les premier et deuxième engrenages ne sont pas engagés à l'aide d'un crabot (92), est réduite dans la transmission (5), et ajuste le couple généré dans le vilebrequin (2) du moteur (107) à une deuxième valeur cible (TV2) différente de la première valeur cible (TV1) après que les premier et deuxième engrenages sont passés à l'état de non-engagement, de telle sorte que les troisième et quatrième engrenages, à passer de l'état de non-engagement où les troisième et quatrième engrenages ne sont pas engagés à l'aide d'un autre crabot (98) à l'état d'engagement où les troisième et quatrième engrenages sont engagés à l'aide dudit autre crabot (98), sont passés à l'état d'engagement dans la transmission (5),
dans lequel la première valeur cible (TV1) est une valeur comprise dans une plage limite prédéterminée qui correspond au moteur (107) dans un état limite où une force d'engagement générée entre le crabot (98) et un trou de crabot (94) est réduite, et
la deuxième valeur cible (TV2) est une valeur extérieure à la plage limite, dans lequel la plage limite est d'une certaine largeur comprenant zéro.

2. Véhicule à enfourcher selon la revendication 1, dans lequel
l'ajusteur de couple (57) ajuste le couple généré par le vilebrequin (2) du moteur (107) à une troisième valeur cible (TV3), dans la plage limite après que les troisième et quatrième engrenages sont passés à l'état d'engagement, de telle sorte que le couple s'approche de la première valeur cible (TV1).

3. Véhicule à enfourcher selon la revendication 2, comprenant en outre un acquéreur de couple exigé (54) qui acquiert un couple exigé à générer par le vilebrequin (2) du moteur (107) conformément à une vitesse de rotation du moteur (107), dans lequel
l'ajusteur de couple (57) ajuste le couple généré par le vilebrequin (2) du moteur (107) de telle sorte que le couple généré par le vilebrequin (2) se rapproche graduellement de la troisième valeur cible (TV3) au couple exigé acquis par l'acquéreur de couple exigé (54).

4. Véhicule à enfourcher selon la revendication 3, comprenant en outre un déterminateur (55) qui détermine si le couple exigé acquis par l'acquéreur de couple exigé (54) est compris ou non dans la plage limite comprenant la première valeur cible (TV1) en réponse à une opération de changement de rapport pour changer un rapport de la transmission (5), dans lequel
l'ajusteur de couple (57) ajuste le couple généré par le vilebrequin (2) du moteur (107) quand il est déterminé que le couple exigé acquis n'est pas compris dans la plage limite, et n'ajuste pas le couple généré par le vilebrequin (2) du moteur (107) quand il est déterminé que le couple exigé acquis est compris dans la plage limite.

5. Véhicule à enfourcher selon la revendication 3 ou 4, dans lequel
l'ajusteur de couple (57) règle la deuxième valeur cible (TV2) à une valeur positive quand le couple exigé acquis est une valeur positive, et règle la deuxième valeur cible (TV2) à une valeur négative quand le couple exigé acquis est une valeur négative.

6. Véhicule à enfourcher selon la revendication 4 ou 5, dans lequel
l'ajusteur de couple (57) règle la deuxième valeur cible (TV2) au couple exigé acquis par l'acquéreur de couple exigé (54).
